# EUROPEAN PATENT APPLICATION

(11) **EP 4 451 005 A1**
(43) Date of publication of application: **23.10.2024**
(21) Application number: 22905808.6
(22) Date of filing: 14.06.2022
(51) Int. Cl.: G01S 7/484, G01S 17/10, G01S 7/4865

(54) **CONTROL METHOD FOR LIDAR AND MULTI-CHANNEL LIDAR**

(30) Priority: 17.12.2021 CN 202111550464
(71) Applicant: Hesai Technology Co., Ltd., Shanghai 201821 (CN)
(72) Inventor: SHI, Congbo, Shanghai 201821 (CN); LI, Kangping, Shanghai 201821 (CN); XIANG, Shaoqing, Shanghai 201821 (CN)
(74) Representative: Fish & Richardson P.C.
(86) International application number: PCT/CN2022/098514
(87) International publication number: WO 2023/109042

(57) **Abstract**

This disclosure provides a control method for a LiDAR, where the LiDAR includes n channels, n ≥ 32, each channel being formed by at least one laser and at least one detector, the control method including: S11: determining a light emission mode of lasers that are to emit light; and S12: controlling the channels to emit light in groups, lasers of channels within each group emitting light in parallel, where pulses emitted by the lasers of the group of channels are encoded in accordance with the light emission mode, at least one of pulses emitted by each laser serving as a ranging pulse, where the light emission mode is configured to cause ranging echo pulses of at least part of channels emitting light in parallel to be temporally staggered from each other. This disclosure sets the light emission mode and controls pulse emitting based on the ranging result, to cause the ranging echo pulses of the channels emitting light in parallel to fall in different intervals of the flight window to reduce crosstalk between multiple channels of the same LiDAR and crosstalk between different LiDARs, thereby improving the precision of detection.

## Description

### TECHNICAL FIELD

This disclosure relates to the technical field of optoelectronic detection and, in particular, to a control method for a LiDAR, and a multi-channel LiDAR.

### BACKGROUND

The light detection and ranging ("LiDAR") is used as a three-dimensional measurement system to achieve a three-dimensional measurement coverage of the measurement region by means of the collected point cloud. Because the resolution of the three-dimensional measurement coverage is subject to the limitation of the ranging range, the laser emission frequency, the scanning angle, the scanning frequency, and other factors, it is difficult to accomplish high-resolution three-dimensional point cloud data collection with single-channel laser scanning. A multi-channel LiDAR based on Time of Flight ("ToF") can use multiple laser emitting and receiving channels, and be suitable for situations where scanning of a large field of view and determination of a high-density point cloud is required. In practical applications, there are many problems with the multi-channel LiDAR due to the parallel light emission of part of the channels, specifically as follows:

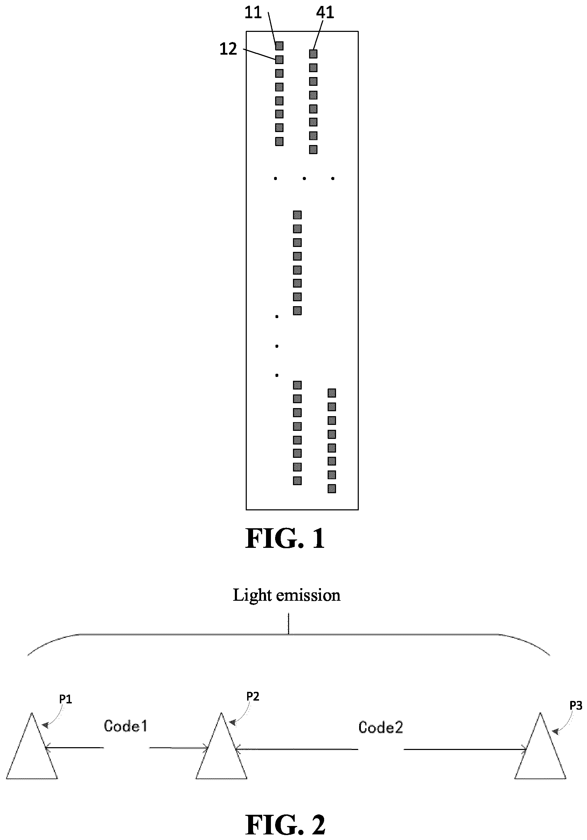

Because the speed of light is fixed, the ToF required to generate a point in the point cloud with an upper ranging limit (e.g., dmax = 200m) is also fixed (e.g., 1.333us). Accordingly, as the LiDAR has more and more lines (e.g., 128 lasers in Fig. 1, which are arranged in 32 rows and 4 columns, where a laser 11 denotes a laser located in the 1st row of the 1st column, a laser 12 denotes a laser located in the 2nd row of the 1st column, and a laser 41 denotes a laser located in the 1st row of the 4th column), if the resolution of the point cloud or the frequency of the point cloud needs to be improved, this can only be done by increasing the number of channels emitting light in parallel. For example, the number of channels used for parallel light emission in a particular model of LiDAR is 8. With continued reference to Fig. 1, for example, lasers 11, 13, 22, 24, 33, 34, 44, and 42 are selected as a group of lasers for parallel light emission and parallel detection. In this case, the channels used for parallel detection are channel1-channel8, then 8 points with an upper ranging limit of 200 m can be generated at the time of 1.333 us. The 128 lasers are divided into 16 groups, each group performing parallel light emission and parallel detection. By doing so, the resolution of the point cloud is improved by a factor of eight compared to a LiDAR with only one laser emitting light at the same time point.

In the case of parallel light emission of multiple channels, crosstalk tends to occur among channels, so encoding settings are needed to eliminate or mitigate crosstalk. Typically, to complete a single detection (generating a point in the point cloud), the LiDAR can control the laser to emit two or more pulses. With reference to Fig. 2, taking a 3-pulse as an example, after the laser emits the first detection pulse p1, the second detection pulse p2 is emitted after a time interval of code1, and then the third pulse p3 is emitted after another time interval of code2. For the double pulse case, after the laser emits the first detection pulse p1, a second detection pulse p2 is emitted after a time interval of code1. For channels emitting light in parallel, the code1 can be set in different values. Specific interval times code1 and code2 are set above for the multi-pulses P1, P2, and P3, that is, the detection laser pulses are encoded.

The receiving end of the LiDAR includes a receiver unit and a signal processor unit, where the receiver unit includes a detector for receiving an echo generated from the detection pulse and converting the echo into an electrical signal. Typically, one laser and one detector form a detection channel. The signal processor unit is used to process the electrical signal and calculate parameters such as the distance of the obstacle and the reflectivity. For the receiving end, different recognition approaches can be used to recognize whether the received echo (and the generated electrical signal) corresponds to the emitted detection pulse. For example, after the laser emits three detection pulses P1, P2, and P3 at intervals of code1 and code2, when the signal processor unit recognizes 3 pulses spaced apart from each other at intervals of code1 and code2 from the received set of pulses (there can be multiple pulses, e.g., more than 3 pulses), it can then be considered that an object is detected by this light-emitting measurement. If no 3 pulses spaced apart at intervals of code1 and code2 are recognized, it is considered that no object has been detected in this light-emitting measurement. This recognition approach is precise and can minimize noisy points, but it is too computationally intensive and prone to point loss. Another alternative approach is as follows: once 2 pulses spaced apart at intervals of code1 or code2 are recognized from the received set of pulses, it is considered that this light-emitting measurement has detected an object. This approach is less computationally intensive and prone to noisy points, but can minimize the occurrence of point loss.

Parallel light emission and measurement of multiple channels additionally introduces the problem of optical crosstalk and electrical crosstalk.

The optical crosstalk is the interference caused by parallel light emission of neighboring channels in a LiDAR. During parallel light emission of multiple channels in the LiDAR, the detector of each channel can receive the reflected light on the target object generated from the detection pulses emitted from the other channels. The intensity of the reflected light increases with decreasing distance, and the higher the reflectivity of the target, the higher the intensity of the reflected light. When the intensity of the reflected light caused by other channels reaches a particular level, an interfering pulse waveform can be generated on the waveform received by the detector of this channel (it can be superimposed on the echo pulse caused by the real obstacle, while the real echo pulse is the basis for the subsequent calculation of the distance and reflectivity, so the calculation of the distance and the reflectivity are both interfered with, which can result in inaccurate results). The optical crosstalk mentioned is the main factor affecting the ranging precision, which mostly occurs in the scenarios with highly reflective plates in the near vicinity.

The electrical crosstalk refers to the situation where, when multiple channels in the LiDAR are receiving electrical signals at the same time, signals from the channels with stronger electrical signals can be crosstalked through the circuit directly to the rest of the receiving channels, resulting in an interfering pulse waveform.

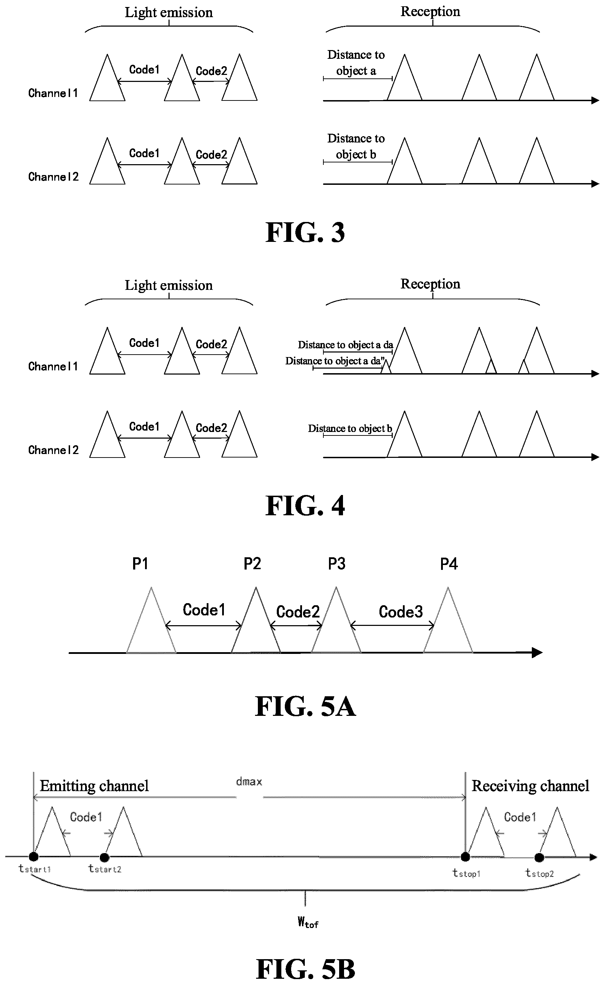

Fig. 3 schematically shows a detection process for two channels in an ideal situation, where there is no electrical crosstalk and optical crosstalk between the two channels, or the electrical crosstalk and the optical crosstalk have been eliminated. As shown in Fig. 3, the pulse emitted by the channel 1 detects an object a and the pulse emitted by the channel2 detects an object b, and when there is no optical crosstalk or electrical crosstalk between the channel1 and the channel2, the channels receive only the reflected echo pulses of the objects corresponding to their own channels, then the ranging result of the object a is calculated by the leading edge + the pulse width, and the distance of the object a can be accurately determined based on the calculation result.

Fig. 4 schematically shows a situation where there is crosstalk between two channels. With reference to Fig. 4, the pulse emitted by the channel1 detects an object a and the pulse emitted by the channel2 detects an object b. As shown in Fig. 4, the channel1 emits three detection pulses Pa1, Pa2, and Pa3, and receives three echo pulses Ea1, Ea2, and Ea3 correspondingly; and the channel2 emits three detection pulses Pb1, Pb2, and Pb3, and receives three echo pulses Eb1, Eb2, and Eb3 correspondingly. When there is crosstalk between the channel1 and the channel 2, the three echo pulses of the channel 2 can separately generate crosstalk on the channel 1, such as the crosstalk echo pulses Eb1', Eb2', and Eb3' in Fig. 4. Because the echo pulses of the channel1 and the channel2 have a particular degree of overlapping in the time axis, the crosstalk echo pulses Eb1', Eb2', and Eb3' are superimposed on the echo pulses Ea1, Ea2, and Ea3 of the channel1, respectively, which can result in a change in the waveform of the echo pulses Ea1, Ea2, and Ea3. In the case shown in Fig. 4, the final echo arrival time determined by the signal processor unit can be advanced, causing the distance of the object a to be calculated as da' from the true value da. Therefore, in the case of Fig. 4, when the channel1 receives the echo of the object a + the echo of the object b (which should actually appear in the orientation corresponding to the channel2) (for the direction of the channel1, there is actually no object b) due to crosstalk, the echo pulse of the object a can be superimposed with the crosstalk echo pulse, resulting in a change in the leading edge and the pulse width of the object a. At this point, the ranging result of the object a is similarly calculated from the leading edge + the pulse width, but it can deviate from the result when there is no crosstalk, and the degree of deviation can depend on the degrees of deviation of the leading edge and the pulse width.

To summarize, signal crosstalk easily occurs between multi-channels and leads to inaccurate detection results, so how to eliminate or reduce the influence of crosstalk between channels and improve the accuracy of the detection is the problem that the multi-channel LiDAR is facing.

The contents of the background section merely disclose the technologies known to the inventor and do not factually represent the prior art in the field.

### SUMMARY

In view of one or more of the existing disadvantages, this disclosure relates to a control method for a LiDAR, where the LiDAR includes n channels, n ≥ 32, each channel being formed by at least one laser and at least one detector, the control method including:
S11: determining a light emission mode of lasers that are to emit light; and
S12: controlling the channels to emit light in groups, lasers of channels within each group emitting light in parallel, where pulses emitted by the lasers of the group of channels are encoded in accordance with the light emission mode, at least one of pulses emitted by each laser serving as a ranging pulse,
where the light emission mode is configured to cause ranging echo pulses of at least part of channels emitting light in parallel to be temporally staggered from each other.

Based on an aspect of this disclosure, at least part of the lasers are configured to emit single pulses, and the light emission mode includes: encoding, for the lasers emitting single pulses, emission time points of the single pulses.

Based on an aspect of this disclosure, at least part of the lasers are configured to emit multi-pulses, where the light emission mode includes: for the lasers emitting multi-pulses, emitting the first pulses in parallel and encoding intervals of the multi-pulses.

Based on an aspect of this disclosure, the step S11 includes: predicting, based on previous ranging results of each channel, time of a ranging echo pulse corresponding to a ranging pulse to be emitted, and setting the light emission mode of lasers that are to perform detection.

Based on an aspect of this disclosure, the step S11 includes: predicting, based on previous ranging results of each channel and a channel neighboring the channel as well as obstacle information, time of a ranging echo pulse corresponding to a ranging pulse to be emitted, and setting the light emission mode of lasers that are to perform detection.

Based on an aspect of this disclosure, the step S11 includes:
S111: dividing a total ToF window of lasers of multiple channels of each group into at least a first interval and a second interval;
S 112: predicting time of at least part of ranging echo pulses generated separately by ranging pulses to be emitted by the lasers of the multiple channels of the each group; and
S113: setting the light emission mode of lasers that are to perform detection to cause ranging echo pulses generated to be distributed in a non-overlapping manner in the second interval after lasers of at least part of multiple channels emitting light in parallel emit ranging pulses.

Based on an aspect of this disclosure, the step S111 further includes: dividing the second interval into k sub-intervals, where k is an integer and is greater than or equal to the number of channels in the group; and
the step S113 includes: setting the light emission mode of lasers that are to perform detection to cause ranging echo pulses generated to be distributed in a non-overlapping manner in the k sub-intervals after lasers of at least part of multiple channels emitting light in parallel emit ranging pulses.

Based on an aspect of this disclosure, the length of each of the sub-intervals is greater than a maximum pulse width of ranging echo pulses of the LiDAR.

Based on an aspect of this disclosure, the step S113 includes: setting the light emission mode of lasers that are to perform detection to cause ranging echo pulses generated to be distributed in sub-intervals of the k sub-intervals that are unoccupied and closest in distance, after lasers of at least part of the multiple channels emitting light in parallel emit ranging pulses.

Based on an aspect of this disclosure, the light emission mode is further configured to cause at least part of ranging echo pulses generated by ranging pulses emitted by lasers of each channel to not overlap with non-ranging echo pulses generated by non-ranging pulses emitted by lasers of the other channels in the group.

Based on an aspect of this disclosure, the multiple pulses include at least two ranging pulses, the ranging pulses being non-first pulses of the multiple pulses.

Based on an aspect of this disclosure, the method further includes:
calculating multiple distances based on multiple ranging pulses and corresponding multiple ranging echo pulses, respectively; and
calculating, based on preset weights of the multiple ranging pulses, a ranging result in a weighted manner based on the multiple distances.

Based on an aspect of this disclosure, the total ToF window is related to ToF corresponding to a maximum detection distance of the LiDAR and an emission duration of the multi-pulses.

A computer storage medium including computer-executable instructions stored thereon, where the executable instructions, when executed by a processor, implement the control method as described.

This disclosure further relates to a multi-channel LiDAR, including:
multiple lasers configured to emit pulses in accordance with a light emission mode, at least one of pulses emitted by each laser serving as a ranging pulse;
multiple detectors, the multiple lasers and the multiple detectors forming multiple channels, each channel including at least one laser and at least one detector; and
a controller apparatus, the controller apparatus being connected to the lasers and the detectors and configured to:
determine a light emission mode of lasers that are to emit light; and
control the channels to emit light in groups, lasers of channels within each group emitting light in parallel, where pulses emitted by the lasers of the group of channels are encoded in accordance with the light emission mode, at least one of pulses emitted by each laser serving as a ranging pulse,
where the light emission mode is configured to cause ranging echo pulses of at least part of channels emitting light in parallel to be temporally staggered from each other.

Based on an aspect of this disclosure, at least part of the lasers are configured to emit single pulses, and the controller apparatus is further configured to: encode, for the lasers emitting single pulses, emission time points of the single pulses.

Based on an aspect of this disclosure, at least part of the lasers are configured to emit multi-pulses, and the controller apparatus is further configured to: for the lasers emitting multi-pulses, emit the first pulses in parallel and encode intervals of the multi-pulses.

Based on an aspect of this disclosure, the controller apparatus is configured to: predict, based on previous ranging results of each channel, time of a ranging echo pulse corresponding to a ranging pulse to be emitted, and set the light emission mode of the lasers that are to emit light.

Based on an aspect of this disclosure, the controller apparatus is configured to: predict, based on previous ranging results of each channel and a channel neighboring the channel as well as obstacle information, time of a ranging echo pulse corresponding to a ranging pulse to be emitted, and set the light emission mode of lasers that are to perform detection.

Based on an aspect of this disclosure, the controller apparatus is configured to determine the light emission mode by means of:
dividing a total ToF window of lasers of multiple channels of each group into at least a first interval and a second interval;
predicting time of at least part of ranging echo pulses generated separately by ranging pulses to be emitted by the lasers of the multiple channels of the each group; and
setting the light emission mode of lasers that are to perform detection to cause ranging echo pulses generated to be distributed in a non-overlapping manner in the second interval, after lasers of at least part of multiple channels emitting light in parallel emit ranging pulses.

Based on an aspect of this disclosure, the controller apparatus is configured to:
divide the second interval into k sub-intervals, where k is an integer and is greater than or equal to the number of channels in the group; and
set the light emission mode of lasers that are to perform detection to cause ranging echo pulses generated to be distributed in a non-overlapping manner in the k sub-intervals after lasers of at least part of multiple channels emitting light in parallel emit ranging pulses.

Based on an aspect of this disclosure, the length of each of the sub-intervals is greater than a maximum pulse width of ranging echo pulses of the LiDAR.

Based on an aspect of this disclosure, the controller apparatus is configured to: set the light emission mode of lasers that are to perform detection to cause ranging echo pulses generated to be distributed in sub-intervals of the k sub-intervals that are unoccupied and closest in distance after lasers of at least part of the multiple channels emitting light in parallel emit ranging pulses.

Based on an aspect of this disclosure, the light emission mode is configured to cause at least part of ranging echo pulses separately generated by ranging pulses emitted by lasers of the group of channels to be temporally staggered from each other, and ranging echo pulses generated by ranging pulses emitted by lasers of each channel to not overlap with non-ranging echo pulses generated by non-ranging pulses emitted by lasers of the other channels in the group.

Based on an aspect of this disclosure, the multiple pulses include at least two ranging pulses, the ranging pulses being non-first pulses of the multiple pulses.

Based on an aspect of this disclosure, the controller apparatus is further configured to: calculate multiple distances based on multiple ranging pulses and corresponding multiple ranging echo pulses, respectively; and calculate, based on preset weights of the multiple ranging pulses, a ranging result in a weighted manner based on the multiple distances.

Based on an aspect of this disclosure, the total ToF window is related to ToF corresponding to a maximum detection distance of the LiDAR and an emission duration of the multi-pulses.

This disclosure predicts, based on the previous ranging results of the receiving end, the possible time point for the return of ranging echo pulses during subsequent detection, and sets the light emission mode of the emitting end in a targeted manner, and then uses the set light emission mode to control the emitting end to emit subsequent pulses, to cause the ranging echo pulses generated by the ranging pulses of each of the channels emitting light in parallel to fall in different intervals of the total flight window, and thus are staggered, separated, and to not overlap with each other or are spaced apart, thereby reducing crosstalk between multi-channels emitting light in parallel in the same LiDAR, and reducing crosstalk between different LiDARs to improve the accuracy of detection.

### BRIEF DESCRIPTION OF DRAWINGS

The drawings that form a part of this disclosure are used to provide further understanding of this disclosure. The illustrative embodiments of this disclosure and description thereof are used to interpret this disclosure, and do not impose any improper limitation on this disclosure. In the drawings:
Fig. 1 shows a schematic diagram of the arrangement of lasers in an existing multi-channel LiDAR;
Fig. 2 shows a schematic diagram of the encoding settings of light emission of 3 pulses;
Fig. 3 shows a schematic diagram of the emission and reception for the case where 2 channels emit 3 pulses at the same time in the absence of crosstalk;
Fig. 4 shows a schematic diagram of the emission and reception for the case where 2 channels emit 3 pulses at the same time in the presence of crosstalk;
Fig. 5A shows a schematic diagram of the time intervals of multi-pulses;
Fig. 5B shows a schematic diagram of a total ToF window in the emission of double pulses;
Fig. 6 shows a flowchart of a control method for a LiDAR in an embodiment of this disclosure;
Fig. 7A shows a schematic diagram of a light emission mode of ranging pulses when 4 channels emit single pulses in parallel in an embodiment of this disclosure;
Fig. 7B shows a schematic diagram of a light emission mode of ranging pulses when 4 channels emit single pulses in parallel in another embodiment of this disclosure;
Fig. 7C shows a schematic diagram of the situation where echo pulses received by 4 channels of Figs. 7A and 7B are staggered from each other;
Fig. 8A shows a schematic diagram of a light emission mode of ranging pulses when 4 channels emit double pulses in parallel in an embodiment of this disclosure;
Fig. 8B shows a schematic diagram of the situation where ranging echo pulses received by 4 channels are staggered from each other in an embodiment of this disclosure;
Fig. 9A shows a schematic diagram of choosing a ranging pulse during the emission of double pulses in an embodiment of this disclosure;
Fig. 9B shows a schematic diagram of choosing a ranging pulse during the emission of 3-pulses in an embodiment of this disclosure;
Fig. 10 shows a schematic diagram of ranging echo pulses received by 4 channels and crosstalk in an embodiment of this disclosure;
Fig. 11A shows a schematic diagram of the division of a total ToF window in an embodiment of this disclosure;
Fig. 11B shows a schematic diagram of the division of a total ToF window in another embodiment of this disclosure;
Fig. 12 shows a schematic diagram of the emission and reception in Embodiment I of this disclosure;
Fig. 13 shows a waveform diagram of ranging echo pulses in Embodiment I of this disclosure;
Fig. 14 shows a schematic diagram of the emission and reception in Embodiment II of this disclosure;
Fig. 15 shows a schematic diagram of the emission and reception in Embodiment III of this disclosure;
Fig. 16 shows a schematic diagram of the emission and reception in Embodiment IV of this disclosure; and
Fig. 17 shows a schematic diagram of a LiDAR in an embodiment of this disclosure.

### DETAILED DESCRIPTION

Only some illustrative embodiments are briefly described below. As would be understood by those skilled in the art, the described embodiments can be modified in various ways without departing from the spirit or scope of this disclosure. Accordingly, the accompanying drawings and description are considered to be essentially illustrative and non-limiting.

In the description of this disclosure, it should be understood that orientation or position relationships indicated by terms "center," "longitudinal," "transverse," "length," "width," "thickness," "upper," "lower," "front," "rear," "left," "right," "vertical," "horizontal," "top," "bottom," "inner," "outer," "clockwise," "anticlockwise," or the like, are orientation or position relationships shown based on the accompanying drawings, are used not to indicate or imply that indicated apparatuses or elements must be in specific orientations or be structured and operated in specific orientations but only to conveniently describe this disclosure and simplify the description, and thus should not be understood as limits to this disclosure. In addition, the terms "first" and "second" are used for the purpose of description only and cannot be understood as indicating or implying relative importance or implicitly indicating the number of technical features indicated. Thus, features defined with "first" or "second" can explicitly or implicitly include one or more of the features. In the description of this disclosure, "plurality" refers to two or more than two, unless otherwise explicitly and specifically defined.

In the description of this disclosure, it should be noted that, unless otherwise specifically stipulated and defined, the terms "installation," "connected," and "connection" should be understood in a broad sense, for example, can be a fixed connection, or can be a detachable connection or an integrated connection; can be a mechanical connection, or can be an electrical connection, or can be mutual communication; can be a direct connection, or can be an indirect connection through an intermediate medium, or can be an internal communication between two elements or an interaction relationship between two elements. For those of ordinary skills in the art, the specific meanings of the terms in this disclosure can be understood based on specific circumstances.

In this disclosure, unless otherwise explicitly stipulated and defined, the first feature "above" or "below" the second feature can include the first feature in direct contact with the second feature, or can include the first feature not being in direct contact with the second feature, but in contact with the second feature through other features between them. Further, the first feature being "over", "above", and "on" the second feature includes the first feature being over or above the second feature, or merely indicates that the horizontal height of the first feature is higher than that of the second feature. The first feature being "under", "below", and "underneath" the second feature includes the first feature being over and above the second feature, or merely indicates that the horizontal height of the first feature is lower than that of the second feature.

The following disclosure provides many different embodiments or examples for implementing different structures of this disclosure. To simplify this disclosure, components and arrangements of particular examples are described below. Of course, they are merely examples, and are not intended to limit this disclosure. Further, in this disclosure, reference numbers and/or reference letters can be repeated in different examples. Such repetition is for purposes of simplicity and clarity, and itself does not indicate a relationship between the discussed embodiments and/or arrangements. In addition, this disclosure provides examples of various particular processes and materials, but those of ordinary skills in the art can appreciate the application of other processes and/or the use of other materials.

The inventors of this disclosure have conceived the idea as follows: by allowing the ranging echo pulses corresponding to the ranging pulses emitted by each of the channels emitting light in parallel to fall at positions as different as possible in the total ToF window, then even if crosstalk arises between the multi-channels, such crosstalk can be mitigated or eliminated. The so-called "emitting light in parallel" means that for all channels that complete the emission and reception within a time window corresponding to the maximum detection distance, they are referred to as emitting light in parallel with each other, which does not necessarily mean that they emit or receive light at exactly the same time. To facilitate the following description, the total ToF window and ToF referred to in the context are first introduced.

The total ToF window is denoted by Wtof, and Wtof is related to the maximum detection distance dmax of the LiDAR, where the exact value of dmax can be different for each model of LiDAR. To complete a single ranging (generating a point in a point cloud), the LiDAR can emit either a single pulse or multi-pulses. For the case where the LiDAR emits single pulses, the total ToF window can be set to Wtof≈dmax (in the LiDAR field, distance can typically be interchangeably converted and corresponded to time, and thus distance is used herein to denote a time window, which is more accurately expressed as Wtof=2*dmax/c, where c is the speed of light. However, for the sake of brevity, the expression Wtof≈dmax is still used hereinafter, and those skilled in the art can clearly understand its meaning.) With reference to Fig. 5A, if the LiDAR emits double pulses P1 and P2, the pulse interval is codel; if the LiDAR emits 3-pulses P1, P2, and P3, the pulse intervals are code1 and code2, respectively; and if the LiDAR emits 4 pulses P1, P2, P3, and P4, the pulse intervals are code1, code2, and code3, respectively. If each channel emits multi-pulses, then when calculating the total ToF window Wtof, it is also important to consider that the last 1 pulse of the multi-pulse should also be able to be received within that total ToF window Wtof, and therefore the time point when the last 1 pulse is returned from the dmax should also be within the total ToF window. With reference to Fig. 5B, taking the emission of double pulses as an example, the total ToF window (or detection window) is Wtof=dmax+code1. Similarly, if 3 pulses are emitted, the total ToF window can be set to Wtof≈dmax+code1+code2; and when 4 pulses are emitted, the total ToF window can be set to Wtof≈dmax+code1+code2+code3. Those skilled in the art can understand that the formula is not a precise way of calculating the total ToF window in LiDAR, and that in practice the charging time of the laser, the width of the pulse, or the like are also to be taken into account. This is an example illustration only, and this disclosure does not impose any limitation on the specific method of calculating the total ToF window.

The ranging pulse is the pulse used to calculate the ToF. If the LiDAR emits a single pulse, then that single pulse is the ranging pulse, and the calculation of ToF takes the emission of the ranging pulse by the laser as the start time point of the timing and the reception by the detector of the ranging echo pulse generated by the reflection of the ranging pulse on the object as the end time point of the timing. If the LiDAR emits multi-pulses, then one or more pulses can be chosen from the multi-pulses as ranging pulses. For example, with reference to Fig. 5B, the laser emits double pulses, and if the first pulse is used as a ranging pulse, the time point at which the ranging pulse is emitted is tstart1, and the time point at which the detector receives the ranging echo pulse corresponding to that ranging pulse is tstop1, then the ToF is tstop1- tstart1. Those skilled in the art can understand that this formula is not a precise way of calculating the ToF in LiDAR, and that in practice, there can be compensation for the offset (e.g., taking into account the temperature drift of the laser, the response of the laser, or the like) at the emitting end; and for the receiving end, to improve the signal-to-noise ratio, a setting of the threshold of the received signal is involved, for example, using the time point at which the intensity of the received echo pulse is greater than the threshold as the end time point of the timing. This is an example illustration only, and this disclosure does not impose any limitation on the specific method of calculating the ToF.

The preferred embodiments of this disclosure are described below in conjunction with the accompanying drawings. It should be understood that the preferred embodiments described herein are used only to illustrate and explain this disclosure, and are not intended to limit this disclosure.

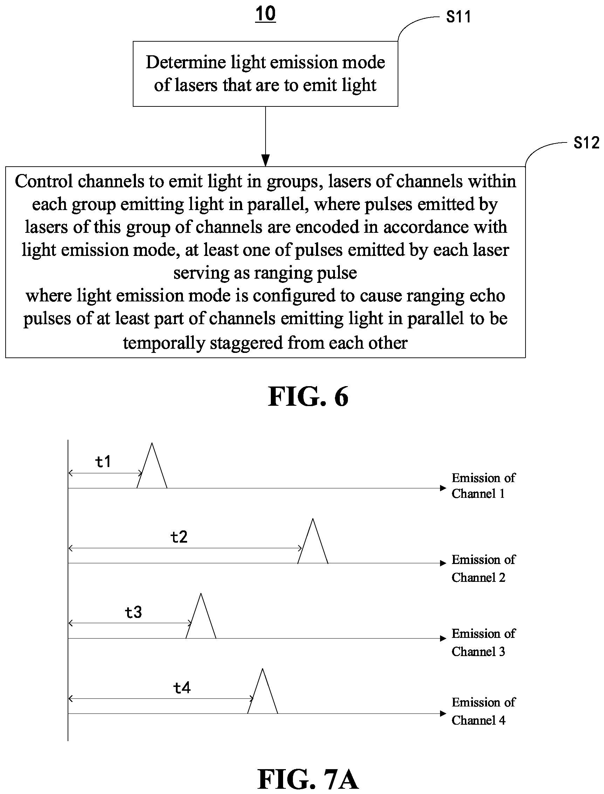

Fig. 6 shows a flowchart of a control method for a LiDAR in an embodiment of this disclosure, where the LiDAR includes n channels, n ≥ 32, and these n channels can be divided into m groups, m < n, which means that each channel can include at least one laser and at least one detector, and if one group includes multiple lasers, the multiple lasers of this group can emit light in parallel. The control method 10 can include steps S11 and S12.

At step S11, a light emission mode of lasers that are to emit light is determined.

The light emission mode is a strategy for encoding the emission of pulses from the laser in the time domain. Based on some parameters of the LiDAR, such as the total number of channels, the spot frequency, the rotation speed, the maximum detection distance, or the like, the total ToF window Wtof of each emission of light and the number of detection channels to be accomplished within that time window can be determined accordingly, and the multiple channels can then be detected in groups/rounds based on that number. Taking a 32-channel mechanical LiDAR as an example, it has a rotation frequency of, for example, 10Hz and a maximum detection distance of 300m. In this embodiment, for example, the 32 channels can be divided into 8 groups, so that there are 4 channels in each group: Channel 1, Channel 2, Channel 3, and Channel 4, where one channel can include one laser and one detector, that is, one for emission and one for reception, which together form one channel for detection; or one channel can also include one laser and multiple detectors; or one channel can include multiple lasers and one detector. At the current step, the emission of pulses from the 32 lasers is encoded in the time domain to determine a number of parameters of light emission of each laser, such as the number of pulses, the emission time point, the size of each pulse, the spacing between multi-pulses, or the like. It should be noted that this disclosure does not impose any limitation on the manner of arranging the lasers and detectors or the correspondence between the numbers of lasers and detectors in one channel.

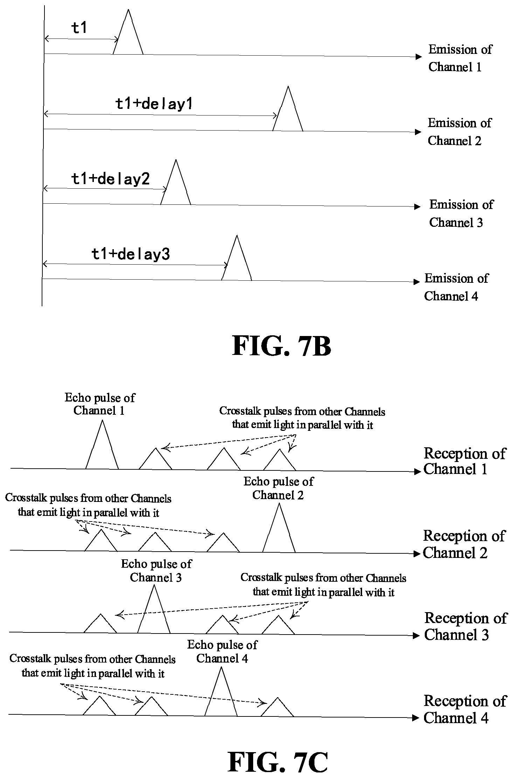

Based on an embodiment of this disclosure, where at least part of the lasers can be configured to emit single pulses, where the light emission mode thereof including: for the lasers emitting single pulses, emission time points of the single pulses can be encoded. Specifically, taking one group having four channels as an example, with reference to Fig. 7A, to complete a detection, all four channels Channel1, Channel2, Channel3, and Channel4 emit single pulses, the light emission mode of which can include encoding emission time points of the four single pulses. For example, Channel1 emits a single pulse at time point t1, Channel2 emits a single pulse at time point t2, Channel3 emits a single pulse at time point t3, and Channel4 emits a single pulse at time point t4 (in this embodiment, the light emission time point is a time point corresponding to the time when the emitted pulse exceeds a particular preset threshold). Alternatively, the emission time point of Channel1 can be used as a reference time point to delay the other channels, which can also achieve the effect of encoding the emission time point. With reference to Fig. 7B, for example, Channel1 emits a single pulse at time point t1, Channel2 emits a single pulse at time point t1+delay1, Channel3 emits a single pulse at time point t1+delay2, and Channel4 emits a single pulse at time point t1+delay3. With reference to Fig. 7C, by encoding the emission time points, the delaying of echo pulses corresponding to the four channels to positions where they do not overlap with each other can be achieved to cause the echo pulse of a channel to be not interfered with by the echo pulses (which are the smaller pulses relative to the echo pulse of that channel shown in each channel in Fig. 7C) of the other channels emitting light in parallel.

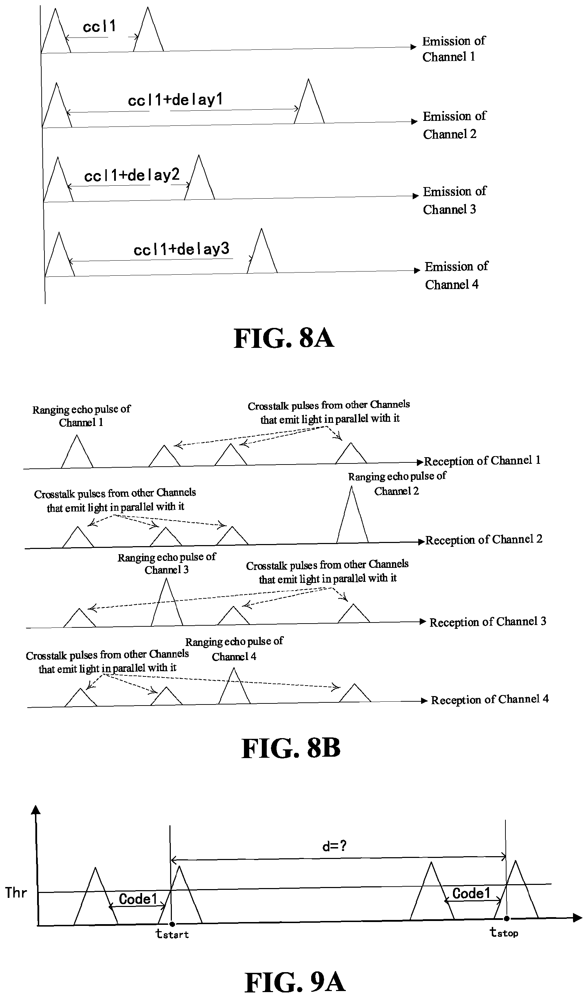

Based on another embodiment of this disclosure, at least part of the lasers are configured to emit multi-pulses to accomplish a single detection, the light emission mode thereof including: for the lasers emitting multi-pulses, emitting the first pulses in parallel and encoding an interval of the multi-pulses, that is, intervals between subsequent pulses and the first pulses. Continuing with the example in which there are four channels in one group, with reference to Fig. 8A, channels Channel1, Channel2, Channel3, and Channel4 all emit double pulses. The time interval code1 between double pulses can be encoded, and for different emitting channels, different code1 can optionally be set. For example, with reference to Fig. 8A, for channel1, code1=ccl1 can be set; for channel2, code1 =ccl1+delay1 can be set; for channels, code1=ccl1+delay2 can be set; and for channel4, code1=ccl1+delay3 can be set, where delay1, delay2 and delay3 are non-zero and different from each other. Fig. 8B shows a schematic diagram of an echo pulse determined after encoding the time interval of the pulses using the approach of Fig. 8A. With reference to Fig. 8B, by encoding the time intervals of the multi-pulses, the delaying of ranging echo pulses corresponding to the four channels to positions where they do not overlap with each other (to avoid confusion, for each channel, instead of showing the double pulse, only the ranging echo pulse corresponding to the ranging pulse in the double pulse is shown, so that Fig. 8B superficially appears to be the same as Fig. 7c, but actually depicts a different application scenario) can be realized to cause the ranging echo pulse of a channel to be not interfered with by ranging echo pulses of the other channels that are received at the same time.

It should be noted that although Figs. 7A-8B do not show a case in which a part of the channels emitting light in parallel emits single pulses and a part emits multi-pulses, in practice, this scheme is also applicable to this disclosure. For the single pulses, the encoding can be performed with reference to the approach of Fig. 7A or Fig. 7B, while for the multi-pulses, the encoding can be performed with reference to the approach of Fig. 8A. As long as it is ensured that the ranging echo pulse corresponding to the ranging pulse emitted by each of the channels emitting light in parallel can fall at different positions in the total ToF window as far as possible and are staggered from each other, the crosstalk caused by parallel light emission of multiple channels can be mitigated or eliminated.

The step S11 of determining the light emission mode of the lasers is briefly described, and the details of how to set the light emission mode and of the realized anti-interference effect are described later. The description proceeds below to step S12 in the control method 10.

At step S12, the channels are controlled to emit light in groups, lasers of channels within each group emitting light in parallel, where pulses emitted by the lasers of the group of channels are encoded in accordance with the light emission mode, at least one of pulses emitted by each laser serving as a ranging pulse.

The ranging pulse is the pulse used to calculate the ToF. For example, if some of the lasers emit double pulses, the 1st or 2nd pulse or both can be used as the ranging pulse for that channel. Alternatively, a part of the lasers can be configured to emit a single pulse and the single pulse serves as the ranging pulse for the channel. It should be noted that the emission of multi-pulses can prevent crosstalk, either crosstalk between the channels of the current LiDAR, or crosstalk from other LiDARs that are present in the current region at the same time. each pulse in the multi-pulse, however, can be used for ranging or be selected as a ranging pulse.

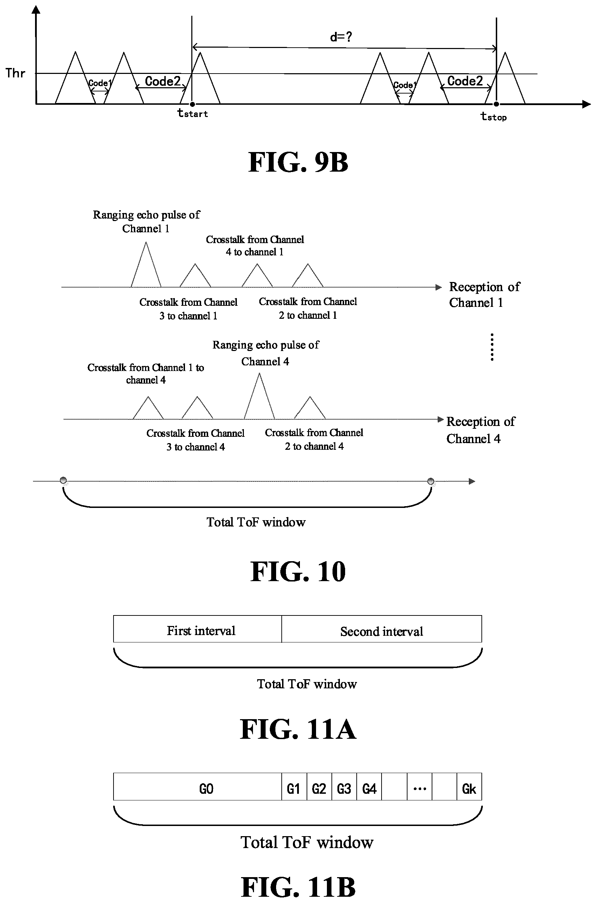

Based on an embodiment of this disclosure, a non-first pulse of multiple pulses can be chosen as the ranging pulse. In the case of parallel light emission of multiple channels, whether the echo of the 1st pulse is crosstalked (by so-called crosstalk, it is meant that for a channel in the channels emitting light in parallel, it is not possible to distinguish between a ranging echo pulse not belonging to this channel and a ranging echo pulse of this channel among the received ranging echo pulses) depends on the distance from the object (which is relatively difficult to change), while whether the subsequent pulse is crosstalked depends on the distance from the object (which is difficult to change) + the pulse interval code (which is relatively a value that can be changed). Therefore, in this disclosure, by using a non-first pulse as the ranging pulse, it is possible to reduce crosstalk and improve ranging precision. If there is no superimposed crosstalk of echoes reflected from obstacles in other channels, the ranging result calculated using subsequent pulses is accurate. Therefore, for a LiDAR emitting multi-pulses, to reduce the amount of calculation, if one of the pulses is to be chosen as the ranging pulse, the non-first pulse is preferably chosen as the ranging pulse; or multiple pulses can be chosen as the ranging pulses. For example, in the case where a double pulse is emitted, with reference to Fig. 9A, the ranging result calculated by choosing the 2nd pulse as the ranging pulse is relatively accurate, and the measured distance d of the object is related to the position of the 2nd pulse-codel. For the case where 3 pulses are emitted, with reference to Fig. 9B, the 3rd pulse is chosen as the ranging pulse and the measured distance d of the object is related to the position of the third pulse-code2-code1. It should be noted that the distance d is in the unit of length and the code is in the unit of time, both of which can be converted to the same unit. Therefore, for ease of description, the formula is only used to indicate the relationship between the two, and no conversion of measurement units has been performed.

The light emission mode in the method 10 is configured to cause: ranging echo pulses of at least part of channels emitting light in parallel to be temporally staggered from each other.

Fig. 10 shows a schematic diagram of a situation in which ranging echo pulses are staggered from each other in the case of parallel emission by 4 channels in an embodiment of this disclosure, each group of emitting channels includes a total of four channels, Channel1, Channel2, Channel3, and Channel4 (it should be noted that, although numbered in the order of 1, 2, 3, and 4, these 4 channels that are actually emitting light in parallel typically have a relatively large physical spacing, and are not neighboring channels), and the four channels emit light in parallel, each of the channels emitting a number of pulses, one of which is chosen as the ranging pulse. Take Channel1 as an example, in addition to receiving the ranging echo pulse generated after the ranging pulse of this channel meets an external object, it can also receive echoes generated after the pulses emitted from other channels are reflected by the object (for these other channels, the echoes are ranging echo pulses if they are received by the channels themselves), which makes it impossible for this channel to distinguish between its own ranging echo pulse and the echoes of other channels, thus causing particular interference to the detection of this channel.

Specifically, as shown in Fig. 10, the ranging echo pulses of the channels are temporally staggered from each other (non-ranging echo pulses are not shown, so the emitting end can emit single pulses or multi-pulses in the embodiment shown in Fig. 10). For example, the ranging echo pulse of channel1 falls at a relatively front position in the total ToF window, the ranging echo pulse of channel2 falls at a relatively back position in the total ToF window, and the ranging echo pulses of channel3 and channel4 fall at relatively middle positions in the total ToF window. The ranging echo pulses of different channels are located at different positions in the total ToF window to cause the ranging echo pulse of each channel and the crosstalk pulses from the other channels can be staggered from each other, which can reduce the optical crosstalk between the channels emitting light in parallel. Fig. 10 shows the situation of reception by channel1 and channel4 only. The situation of the echo pulses received by the other channels is similar and is not repeated here. In this manner, even though the ranging echo pulses of Channel 2, Channel 3 and Channel 4 cause interference at the detector of Channel 1, these interfering signals do not interfere with the ranging echo pulse of Channel 1 because they are temporally staggered with the ranging echo pulse of Channel 1, thereby reducing the influence on the precision of the ranging results of Channel 1 and improving the precision of detection of the entire LiDAR.

The technical solution of the control method 10 is preliminarily described by steps S11 and S12. To stagger the ranging pulses of each of the channels emitting light in parallel with each other, it is preferred that the ToF required for the detection to be carried out can be predetermined on the basis of the previous ranging results, and the light emission mode corresponding to the lasers that are to perform emission can then be set. In the following, this is illustrated by way of an embodiment.

Based on a preferred embodiment of this disclosure, the step S11 includes: predicting, based on previous ranging results of each channel, time of a ranging echo pulse corresponding to a ranging pulse to be emitted this time, and setting the light emission mode of lasers that are to perform detection.

For example, for a laser emitting a single pulse, the single pulse is a ranging pulse. The laser first emits a single pulse at the T1 time point to determine a ranging result, and then predicts a ranging result that would have been determined if the detection were performed at the T2 time point. This prediction can be performed based on the type of the obstacle, the speed and direction of movement of the obstacle relative to the LiDAR, and the rotation speed or scanning frequency of the LiDAR (an interval between the T1 and T2 time points can be determined correspondingly).

The process is performed separately for multiple channels emitting light in parallel to predict the ranging result for the next time point. Finally, the light emission mode of the lasers of the multiple channels at the T2 time point is set based on the predicted ranging results to cause the ranging echo pulses of the multiple channels emitting light in parallel to be staggered from each other.

For example, the emission time points of the single pulses of the lasers of each channel at the time point T2 are encoded to cause the echo pulses corresponding to the single pulses emitted at the time point T2 to be staggered from each other. As another example, for lasers emitting multi-pulses, take a double pulse as an example, where the 2nd pulse is a ranging pulse, a double pulse is first emitted in parallel at the T1 time point, and the ranging result is determined based on the ranging pulse; then the ranging result of a double pulse emitted at the T2 time point is predicted. The process is performed separately for multiple channels emitting light in parallel to predict the ranging result for the next time point. Finally, the light emission mode of the lasers of the multiple channels at the T2 time point are set based on the predicted ranging results. For example, the intervals of the double pulses of the lasers of each channel at the time point T2 are encoded to cause the double pulses emitted at the time point T2 and the received ranging echo pulses to be staggered from each other.

Based on a preferred embodiment, to reduce the amount of calculation, the 1st pulses from the lasers of the multiple channels can be set to be emitted in parallel, to cause the ranging echo pulses can be staggered from each other by setting corresponding pulse interval times for each channel.

Based on a preferred embodiment of this disclosure, the step S11 includes: predicting, based on previous ranging results of each channel and a channel neighboring the channel as well as obstacle information, time of a ranging echo pulse corresponding to a ranging pulse to be emitted, and setting the light emission mode of lasers that are to perform detection.

For example, based on the ranging results of each channel and its neighboring channels at the T1 time point, the ranging result of that channel at the T2 time point is predicted, and based on the prediction result, the light emission mode of the lasers that are to perform emission is set. As another example, based on the distance detected by each channel at 2 neighboring horizontal angles θi and θi+1, the distance detected by that channel at the horizontal angle θi+2 is predicted, and the light emission mode of the lasers that are to perform emission is set based on the prediction result. For another example, combining techniques such as object recognition (e.g., as to whether the object is a static obstacle, a slow obstacle, or a fast-moving obstacle) and distance prediction, and taking into account the previous ranging results, a prediction result of a ranging pulse to be emitted is predicted, and based on the prediction result, a light emission mode of the lasers that are to perform emission is set.

It should be noted that the purpose of using any one or more of the ways to set the light emission mode of the lasers that are to perform detection is all to enable the ranging pulses of at least some of the channels emitting light in parallel to be staggered from each other, and preferably the ranging pulses of each of the channels emitting light in parallel are staggered from each other. With regard to the specific degree of staggering, the criterion is that the processor can later distinguish between ranging echo pulses from its own channel and interfering pulses, to cause the ranging precision of that channel to be not affected.

The illustrates, by way of a preferred embodiment, the setting of the light emission mode of the lasers that are to perform emission based on the previous ranging results. It can be seen that the accuracy of the previous ranging results directly affects the setting of the light emission mode and the effect of staggering of the ranging pulses with each other. How the accuracy of the ranging results can be improved is further described below by way of a preferred embodiment.

The embodiments all chose to use one pulse as the ranging echo pulse as an example.

Based on a preferred embodiment of this disclosure, in the case of multiple channels emitting light in parallel, if each channel emits multi-pulses, at least two pulses can be chosen as ranging pulses from multiple pulses and the ranging result can be acquired based on the at least two ranging pulses, which can reduce the influence of signal crosstalk and improve the accuracy of the ranging result.

Based on a preferred embodiment of this disclosure, in the case where multiple ranging pulses are chosen, multiple distances can be calculated based on the multiple ranging pulses and corresponding multiple ranging echo pulses, respectively, and then the multiple distances can be subjected to a weighted calculation based on preset weights of the multiple ranging pulses to arrive at a ranging result, which can reduce the effect of crosstalk on the ranging and improve the accuracy of the ranging. For example, if 4 pulses are emitted, with reference to Fig. 5A, these 4 pulses are P1, P2, P3 and P4, then P1-P4 can all be chosen as ranging pulses, in which case the final ranging result is d=(d P1+ d P2+ d P3+ d P4)/4; or P2-P4 can be chosen as ranging pulses, in which case the final ranging result is d=(d P2+ d P3+ d P4)/3.

In the 2 embodiments, the contribution of each pulse to the final ranging result d is given the same weight of 1. It can also be considered based on different weights. For example, a different weight Xi is assigned to each pulse, 1>Xi>0. For example, P1-P4 are all chosen as ranging pulses, and the final ranging result is d=X P1*d P1+ X P2* d P2+ x P3*d P3+ X P4*d P4, where X P1+ X P2+ X P3+ X P4=1.

The foregoing illustrates, by way of embodiments, how the accuracy of the ranging result can be improved. Based on the previous ranging results, to stagger the ranging pulse of each of the channels emitting light in parallel with each other, the total ToF window can be divided into intervals in advance, and then an interval that has not yet been marked and not yet been occupied can be assigned to each ranging echo pulse. Compared to the aforementioned embodiments of encoding the emission time points of single pulses (corresponding to Figs. 7A-7C), or the embodiments of emitting the first pulses of multi-pulses in parallel and encoding the intervals of the multi-pulses (corresponding to Figs. 8A-8B), this allows for a more precise control of the positions of the ranging echo pulses, which is further described below by means of preferred embodiments.

Based on a preferred embodiment of this disclosure, the step S11 includes the following sub-steps:

At sub-step S111, a total ToF window of lasers of multiple channels of each group is divided into at least a first interval and a second interval. With reference to Fig. 11A, the total ToF window is divided into two intervals, where a first interval is used for placing other pulses in front of the ranging echo pulses, and a second interval is used for placing the ranging echo pulses of the various channels.

At sub-step S 112, time of at least part of ranging echo pulses generated separately by ranging pulses to be emitted by the lasers of the multiple channels of the each group is predicted. Based on the previous ranging results of each channel or its neighboring channels, the time of the ranging echo pulse corresponding to the ranging pulse to be emitted is predicted.

At sub-step S113, the light emission mode of lasers that are to perform detection is set to cause ranging echo pulses generated to be distributed in a non-overlapping manner (the degree of non-overlapping can be different for each LiDAR after lasers of at least part of multiple channels emitting light in parallel emit ranging pulses, , and the criterion is that the processor can later differentiate between the ranging echo pulses of this channel and the crosstalk pulses, to cause the ranging accuracy of this channel to be not affected) in the second interval. The light emission mode of the lasers is set based on the predicted time of the ranging echo pulses, to cause the ranging echo pulses to be distributed in a non-overlapping manner in the second interval by means of encoding of at least one of the emission time points the pulse intervals. Non-overlapping of ranging echo pulses includes the ranging echo pulses being temporally staggered from each other, separated from each other, not overlapping, spaced apart, falling at different positions, or the like.

Based on a preferred embodiment of this disclosure, the sub-step Sill further includes: dividing the second interval into k sub-intervals, where k is an integer and is greater than or equal to the number of channels in the group to have each channel fall in a different sub-interval as much as possible.

The sub-step S113 includes: setting the light emission mode of lasers that are to perform detection, to cause ranging echo pulses generated to be distributed in a non-overlapping manner in the k sub-intervals after lasers of at least part of multiple channels emitting light in parallel emit ranging pulses,.

With reference to Fig. 11B, the total ToF window is divided into k+1 sub-intervals, G0, G1, G2, ..., and Gk, where G0 is equivalent to the first interval for placing the other pulses preceding the first received ranging echo pulses; and G1-Gk are used for placing the ranging echo pulses, where G1 is equivalent to the 1st sub-interval that theoretically exists for placing ranging echo pulses, and ideally, the non-ranging pulses preceding the first received ranging echo pulse are all concentrated within G0 and do not appear within G1-Gk. Specifically for a given channel, the closer the obstacle for that channel, the shorter the ToF of the ranging echo pulse, and therefore the more sub-intervals that can be used to place the ranging echo pulses; and the farther the obstacle for that channel, the longer the ToF of the ranging echo pulses, and therefore the fewer sub-intervals that can be used to place the ranging echo pulses.

Based on a preferred embodiment of this disclosure, the length of each of the sub-intervals is greater than a maximum pulse width of ranging echo pulses of the LiDAR. With reference to Figs. 11A and 11B, for sub-intervals G1-Gk, the length of each interval is assumed to be G, with G being greater than the maximum pulse width of the ranging echo pulse to ensure that one ranging echo pulse can be placed in each sub-interval. Preferably, G ≥ 2 times the pulse width. each model of LiDAR can have a different pulse width. When the maximum pulse width is about 30 ns, G is preferably 60 ns or more.

Combining Figs. 11A and 11B, the principle of dividing the length of the first interval (i.e., the G0 interval) is that other pulses preceding the ranging echo pulses can be placed at the smallest ranging distance. The length of the time window for G0 is (Wtof - k*G) and G 1 is the 1st sub-interval theoretically available for placing ranging echo pulses, so it is desirable as much as possible to have non-ranging echo pulses concentrated within GO and not in sub-intervals G1-Gk, thus enabling sub-intervals G1-Gk to be used for placing ranging echo pulses of the various channels.

For example, taking the example that the laser emits 3 pulses and chooses the 3rd pulse as the ranging pulse, then the length of the G0 interval is preferably chosen such that the 1st echo pulse and the 2nd echo pulse can be placed at the smallest ranging distance, and then G0≈ dmin+code1+code2 can be set, where dmin is the smallest distance measurable by the LiDAR. Thus, the interval of G1 is approximately [dmin+code1+code2, dmin+code1+code2+G], and thus G1 corresponds to a theoretical 1st sub-interval used to place a ranging echo pulse (in this embodiment, the echo pulse of the 3rd pulse).

G1 = G2 = .... = Gk-1 = Gk=G, where k is at least greater than or equal to the number of channels emitting light in parallel. Preferably, k is greater than the number of channels emitting light in parallel. This is because there is a need to ensure that the ranging echo pulses of the channels emitting light in parallel each occupy one sub-interval exclusively, which means that they are distributed in a non-overlapping manner within the sub-intervals G1-Gk, and there is also a need to take into account the fact that, for the channels with obstacles that are farther away, their non-ranging pulses can occupy some sub-intervals as well. Therefore, to further reduce the interference of ranging echo pulses and non-ranging echo pulses from other channels to this channel, based on a preferred embodiment of this disclosure, the light emission mode can further be configured to cause at least part of ranging echo pulses generated by ranging pulses emitted by lasers of each channel to not overlap with non-ranging echo pulses generated by non-ranging pulses emitted by lasers of the other channels in the group.

Based on a preferred embodiment of this disclosure, the step S113 includes: setting the light emission mode of lasers that are to perform detection to cause ranging echo pulses generated to be distributed in sub-intervals of the k sub-intervals that are unoccupied and closest in distance after lasers of at least part of the multiple channels emitting light in parallel emit ranging pulses. By placing the ranging echo pulses in the unoccupied sub-intervals, the influence of crosstalk on the ranging results can be prevented. Further, by placing the ranging echo pulses in sub-intervals that are as close as possible, the measurement duration is shortened and the efficiency of the measurement is increased. The method of distributing ranging echo pulses of this preferred embodiment is specifically described below by means of Embodiments I through IV.

### Embodiment I

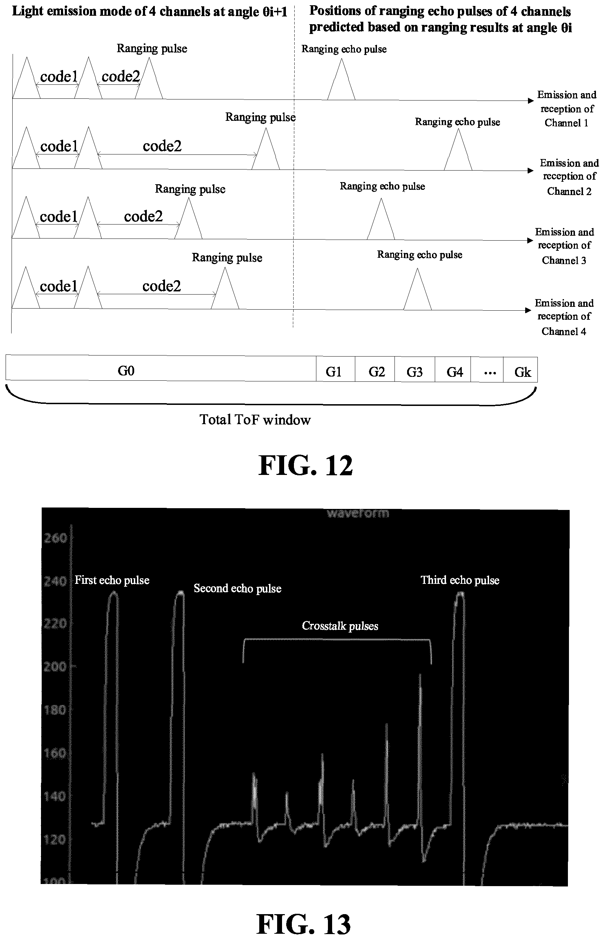

In Embodiment I, a group of 4 channels (Channel 1, Channel 2, Channel 3, and Channel 4) of lasers emit light in parallel, where the lasers of each channel emit 3 pulses of which the 3rd pulse is a ranging pulse. With reference to Fig. 11B, the total ToF window is divided into sub-intervals G0, and G1-Gk, where the midpoint positions of the G1-Gk sub-intervals are g1-gk. With reference to Fig. 12, each channel emits 3 pulses, where the time interval between the 1st pulse and the 2nd pulse is code1 and the time interval between the 2nd pulse and the 3rd pulse is code2. For ease of description, code1 is set to a fixed value, but those skilled in the art can understand that code1 can also be set to a different value to prevent crosstalk from other LiDARs, which means that the pulse intervals can be encoded;

The minimum value of the pulse intervals code1 and code2 is defined as Cmin, where Cmin is related to the processing speed of the laser charging circuit of the emitting channel. In a preferred embodiment of this disclosure, Cmin ≥ pulse width/2 can be set to more accurately distinguish 2 neighboring pulses.

After the settings are made, the previous ranging results are first determined based on the control method 10. The 4 channels Channel 1, Channel 2, Channel 3, and Channel 4 emit light in parallel, and the ranging results at an angle θi in the horizontal direction (or T1 time point, which corresponds to the description in the embodiments) are d1, d2, d3 and d4, respectively.

Then, the positions (time points) of the ranging echo pulses of the 4 channels Channel 1, Channel 2, Channel 3, and Channel 4 at an angle of θi+1 (or a T2 time point, which corresponds to the description in the embodiments) are predicted based on the previous ranging results, and the light emission mode is set based on the predicted positions of the ranging echo pulses, that is, the code2 of the light emitting pulses at the angle of θi+1 is encoded. Specifically, the following steps are performed prior to light emission:
1. A Channel x for which code2 has not yet been calculated is arbitrarily chosen, where x ∈ (1,2,3,4), and its ranging result at the angle θi in the horizontal direction is dx;
2. the closest sub-interval Gy is chosen from the G1-Gk sub-intervals that have not yet been marked, and the midpoint position of the sub-interval Gy is gy;
3. it is determined whether the chosen sub-interval Gy meets the formula: gy - dx - code1 > Cmin; and
   3.1. if gy - dx - code1 ≥Cmin, code2 of Channel x is set to gy - dx - c1 and the sub-interval Gy is marked at the same time. In addition, a determination needs to be made as to whether the 1st pulse and the 2nd pulse occupy other sub-intervals between G1-Gy? and if so, the sub-intervals are also marked and are not assigned to the other ranging pulses.
   3.2. If gy - dx - code1 < Cmin, which indicates that the sub-interval Gy, although not yet marked, is not suitable for use in Channel x, the closest sub-interval Gz is selected from the sub-intervals Gy+1-Gk that have not yet been marked, so as to re-perform the determination in step 3.
   3.3. If no sub-interval meeting the condition can be found from the sub-intervals that have not yet been marked, the sub-interval Gk is chosen and the code2 of Channel x is set to gk - dx - code1.
4. Steps 1-3 continue until code2 is calculated and chosen for all channels that are to emit light in parallel next.

After setting the light emission mode of the 4 channels at the angle of θi+1 by the above steps, the lasers of the 4 channels are controlled to emit light based on the corresponding light emission mode. As shown in Fig. 12, in this way, the ranging echo pulses generated by the 4 channels that synchronously emit light are temporally staggered from each other, thereby mitigating or avoiding the problem of crosstalk. It should be noted that only ranging echo pulses are shown at the receiving ends of the channels in Fig. 12, while non-ranging echo pulses are not shown to avoid confusion.

It should be noted that, in addition, if the object is far away, assuming that in the extreme case where the object measured by each of the channels emitting light in parallel at the angle θi is at the greatest distance, the ranging echo pulse of each channel is divided into the Gk interval to ensure that the point can be measured. However, the farther away the object is, the weaker the crosstalk is (the obstacle is far away, so the echo for each channel is very weak, and the crosstalk to each other is also very weak), and the requirement of the accuracy of ranging at a distance is lower, so the ranging requirement can also be met.

When the object is close and the crosstalk is strong, by using the control method 10 of this disclosure, it is possible to make the ranging echo pulse of each of the channels not interfere with each other, thus determining accurate ranging results. The pulse waveform thereof is as shown in Fig. 13, where the crosstalk pulses (which, in terms of time points, roughly correspond to the time points of the ranging echo pulses of the other channels within the total flight window) fall between the second echo pulse and the third echo pulse, that is, between the non-ranging pulses (the first echo pulse and the second echo pulse) and the ranging echo pulse (the third echo pulse) of the channel, to cause the crosstalk pulses to be not interfere with the ranging of the channel, thereby determining accurate ranging results.

### Embodiment II

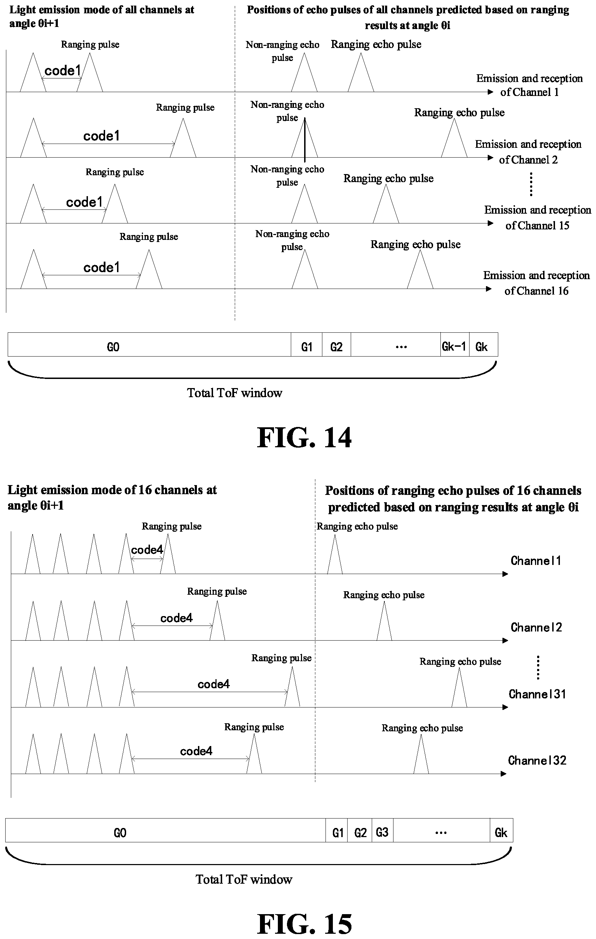

In Embodiment II, all channels of the LiDAR emit light in parallel, where each channel emits double pulses of which the 2nd pulse is a ranging pulse. With reference to Fig. 11B, the total ToF window is divided into sub-intervals G0, and G1-Gk, where the midpoint positions of the G1-Gk sub-intervals are g1-gk. With reference to Fig. 14, each channel emits double pulses, where the pulse interval is code1. Code1 should be greater than Cmin.

After the settings are made, the previous ranging results are first determined based on the control method 10. All channels emit light in parallel. For example, the light emitting channels are Channel 1-Channel 16, and the ranging results at the angle θi in the horizontal direction are d1, d2, ..., d8, ..., and d16.

Next, based on the previous ranging results, the positions of the ranging echo pulses of the channels Channel 1-Channel 16 at the angle of θi+1 are predicted, and the light emission mode is set based on the predicted positions of the ranging echo pulses, that is, code1 of each of the channels is encoded, and finally the channels emit light in parallel at the angle of θi+1. Specifically, the following steps are carried out:
1. A channel x for which code1 has not yet been calculated is arbitrarily chosen, where its ranging result at the angle θi in the horizontal direction is dx;
2. the closest sub-interval Gy is chosen from the G1-Gk sub-intervals that have not yet been marked, and the midpoint position of the sub-interval Gy is gy;
3. it is determined whether the chosen sub-interval Gy meets the formula: gy - dx≥Cmin; and
   3.1. if gy - dx≥Cmin, code1 of channel x is set to gy - dx and the sub-interval Gy is marked at the same time. In addition, a determination needs to be made as to whether the echo for the 1st pulse occupies other sub-intervals between G1-Gy? and if so, the sub-interval is also marked and can be not assigned to the other 2nd ranging pulses. With reference to Fig. 14, the G1 sub-interval is occupied by non-ranging echo pulses, then this sub-interval can be not assigned to the other ranging echo pulses.
   3.2. If gy - dx < Cmin, which indicates that the sub-interval Gy, although not yet marked, cannot be used for Channel x, the closest sub-interval Gz is selected from the sub-intervals Gy+1-Gk that have not yet been marked, so as to re-perform the determination in step 3.
   3.3. If no sub-interval meeting the condition can be found from the intervals that have not yet been marked, Gk is chosen and the code1 of channel x is calculated to be gk - dx.
4. Steps 1-3 continue until code1 is calculated and chosen for all channels that are to emit light in parallel next.
5. At the angle θi+1, each channel emits light in accordance with the calculated code1.

As shown in Fig. 14, by means of the scheme, the ranging echo pulses generated by all the channels that synchronously emit light are temporally staggered from each other, thereby mitigating or avoiding the problem of crosstalk. It should be noted that the figure only illustrates the case where there are 16 channels emitting light in parallel, which are numbered sequentially as channels 1-16, but there is no limitation on exactly which of these channels correspond to which lines on the LiDAR, as it is related to the layout arrangement of multiple lasers of the LiDAR. Typically, the channels emitting light in parallel are multiple lines on a multi-line LiDAR that are physically spaced relatively far apart from each other in terms of their arrangement. In an embodiment, the 31st line, the 60th line, the 70th line, and the 85th line may, for example, emit light in parallel.

### Embodiment III

In Embodiment III, a group of 32 channels emit light in parallel, with each channel emitting 5 pulses, where the 5th pulse is a ranging pulse (it should be noted that with a greater number of channels emitting light in parallel, the probability and effect of crosstalk can be reduced by increasing the number of pulses emitted from a single detection of each channel). With reference to Fig. 11B, the total ToF window is divided into sub-intervals G0, and G1-Gk, where the midpoint positions of the G1-Gk sub-intervals are g1-gk. With reference to Fig. 15, each channel emits 5 pulses, where the time interval between the 1st pulse and the 2nd pulse is code1, the time interval between the 2nd pulse and the 3rd pulse is code2, the time interval between the 3rd pulse and the 4th pulse is code3, and the time interval between the 4th pulse and the 5th pulse is code4. For ease of description, code1-code3 are set to fixed values, but those skilled in the art can understand that code1-code3 can also be set to different values to prevent crosstalk from other LiDARs. Among them, code1-code3 are all greater than Cmin.

After the settings are made, the previous ranging results are first determined based on the control method 10.

The channels emitting light in parallel are Channels 1-16, and the ranging results at the angle 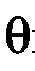 i in the horizontal direction (with a horizontal resolution of 0.1°, assuming that θi=0°) are d1, d2, ..., and d32;

next, based on the previous ranging results, the positions of the ranging echo pulses of the 16 channels Channel 1-Channel 32 at the angle of θi+1 (then θi+1=0.1°) are predicted, and the light emission mode is set based on the predicted positions of the ranging echo pulses, that is, code4 is encoded. Specifically, the following steps are performed prior to light emission:
1. A channel x for which code4 has not yet been calculated is arbitrarily chosen, where its ranging result at the angle θi in the horizontal direction is dx;
2. the closest interval Gy is chosen from the G1-Gk intervals that have not yet been marked, with the midpoint position thereof being gy;
3. it is determined whether the chosen sub-interval Gy meets the formula: gy - dx - codel- code2-code3 ≥ Cmin; and
   3.1. if gy - dx - code1 - code2 - code3 ≥Cmin, code4 of channel x is set to gy - dx - code1 - code2 - code3 and the sub-interval Gy is marked at the same time. In addition, a determination needs to be made as to whether the 1st pulse, the 2nd pulse, the 3rd pulse, and the 4th pulse occupy other sub-intervals between G1-Gy? And if so, the sub-intervals are also marked and can be not assigned to the other 5th ranging pulses.
   3.2. If gy - dx - code1 - code2 - code3 < Cmin, which indicates that the sub-interval Gy, although not yet marked, cannot be used for Channel x, the closest sub-interval Gz is selected from the sub-intervals Gy+1-Gk that have not yet been marked, so as to re-perform the determination in step 3.
   3.3. If no sub-interval meeting the condition can be found from the intervals that have not yet been marked, Gk is chosen and the code4 of channel x is calculated to be gk - dx - code1 - code2 - code3.
4. Steps 1-3 continue until code4 is calculated and chosen for all channels that are to emit light in parallel next.
5. At the angle θi+1, each channel emits light in accordance with the calculated code4.

As shown in Fig. 15, by means of the scheme, the ranging echo pulses generated by all the 32 channels that synchronously emit light are temporally staggered from each other, thereby mitigating or avoiding the problem of crosstalk. It should be noted that only ranging echo pulses are shown at the receiving ends of the channels in Fig. 15, while non-ranging echo pulses are not shown to avoid confusion.

### Embodiment IV

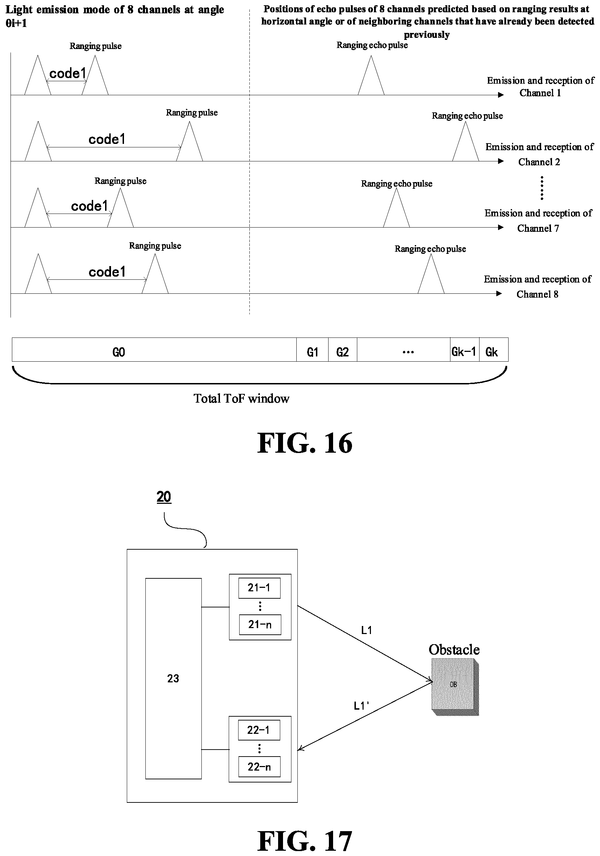

In Embodiment IV, a group of 8 channels emit light in parallel, where each channel emits double pulses of which the 2nd pulse is a ranging pulse. With reference to Fig. 11B, the total ToF window is divided into sub-intervals G0, and G1-Gk, where the midpoint positions of the G1-Gk sub-intervals are g1-gk. With reference to Fig. 16, each channel emits double pulses, where the pulse interval is code1 and code1 > Cmin.

After the settings are made, the previous ranging results are first determined based on the control method 10:
The channels emitting light in parallel are Channels 1-8, and the ranging results at the angle θi in the horizontal direction (e.g., the horizontal resolution is 0.1°, θi=0°) are d1, d2, ..., and d8;

For any channel, the ranging results at the horizontal angles that have already been detected previously are known, for example, the ranging results at the angle θi-1 in the horizontal direction, the ranging results at the angle θi-2 in the horizontal direction, ..., and based on these ranging results at the horizontal angles that have been detected previously, the ranging result at the angle θi+1 in the horizontal direction is predicted by combining object recognition as well as time intervals of neighboring detections, which can be dx.

For example: if it is determined from the previous ranging results that an obstacle in a particular field of view range is a car, where the speed of the car is about V and the conventional width of the car is L, and a part of the width of the car has already been detected earlier at the angle θi-1 to be 1 < L, then it is predicted that at the angle θi+1 in the horizontal direction, this channel can still detect the car, and its ranging result can be dx;

next, based on the previous ranging results, the positions of the ranging echo pulses of the channels Channel 1-Channel 8 at the angle of θi+1 are predicted, and the light emission mode is set based on the predicted positions of the ranging echo pulses, that is, code1 is encoded, and finally the channels emit light in parallel at the angle of θi+1. The specific steps are as follows:
1. A Channel x for which code1 has not yet been calculated is arbitrarily chosen, where its predicted ranging result at the angle θi in the horizontal direction can be dx;
2. the closest interval Gy is chosen from the G1-Gk sub-intervals that have not yet been marked, with the midpoint position thereof being gy;
3. it is determined whether the chosen sub-interval Gy meets the formula: gy - dx≥Cmin; and
   3.1. if gy - dx≥Cmin, code1 of channel x is set to gy - dx and the sub-interval Gy is marked at the same time. In addition, a determination needs to be made as to whether the 1st pulse occupies other sub-intervals between G1-Gy? and if so, the sub-interval can also be marked;
   3.2. if gy - dx < Cmin, which indicates that the sub-interval Gy, although not yet marked, cannot be used for Channel x, the closest sub-interval Gz is selected from the sub-intervals Gy+1-Gk that have not yet been marked, so as to re-perform the determination in step 3.
   3.3. If no sub-interval meeting the condition can be found from the intervals that have not yet been marked, Gk is chosen and the code1 of channel x is calculated to be gk - dx.
4. Steps 1-3 continue until code1 is calculated and chosen for all channels that are to emit light in parallel next.
5. At the angle θi+1, each channel emits light in accordance with the calculated code1.

As shown in Fig. 16, by means of the scheme, the ranging echo pulses generated by all the 16 channels that synchronously emit light are temporally staggered from each other, thereby mitigating or avoiding the problem of crosstalk. It should be noted that only ranging echo pulses are shown at the receiving ends of the channels in Fig. 16, while non-ranging echo pulses are not shown to avoid confusion.

In summary, based on the size of the total ToF window Wtof, and knowing that the receiving channels can receive crosstalk pulses, the light emission mode of the emitting end is set based on the ranging results at the receiving end, and then the set light emission mode is used to control the emitting end to emit pulses, to cause the ranging echo pulse generated by the ranging pulse of each of the channels emitting light in parallel to fall in different intervals in the total ToF window Wtof and are thus staggered from each other, which reduces crosstalk between multiple channels emitting light in parallel of the same LiDAR and reduces crosstalk between different LiDARs to improve the accuracy of detection.

This disclosure further relates to a computer storage medium including computer-executable instructions stored thereon, where the executable instructions, when executed by a processor, implement the control method 10 as described.

This disclosure further relates to a multi-channel LiDAR 20, as shown in Fig. 17, including:
multiple lasers 21 configured to emit pulses in accordance with a light emission mode, at least one of pulses emitted by each laser 21 serving as a ranging pulse;
multiple detectors 22, the multiple lasers 21 and the multiple detectors 22 forming multiple channels, each channel including at least one laser 21 and at least one detector 22; and
a controller apparatus 23, the controller apparatus 23 being connected to the lasers 21 and the detectors 22 and configured to:
determine a light emission mode of lasers 21 that are to emit light; and
control the channels to emit light in groups, lasers 21 of channels within each group emitting light in parallel, where pulses emitted by the lasers 21 of the group of channels are encoded in accordance with the light emission mode, at least one of pulses emitted by each laser 21 serving as a ranging pulse,
where the light emission mode is configured to cause ranging echo pulses of at least part of channels emitting light in parallel to be temporally staggered from each other.

Based on a preferred embodiment of this disclosure, at least part of the lasers 21 are configured to emit single pulses, and the controller apparatus 23 is further configured to: encode, for the lasers 21 emitting the single pulses, emission time points of the single pulses.

Based on a preferred embodiment of this disclosure, at least part of the lasers 21 are configured to emit multi-pulses, and the controller apparatus 23 is further configured to: for the lasers 21 emitting the multi-pulses, emit the first pulses in parallel and encode intervals of the multi-pulses.

Based on a preferred embodiment of this disclosure, the controller apparatus 23 is configured to: predict, based on previous ranging results of each channel, time of a ranging echo pulse corresponding to a ranging pulse to be emitted, and set the light emission mode of the lasers 21 that are to emit light.

Based on a preferred embodiment of this disclosure, the controller apparatus 23 is configured to: predict, based on previous ranging results of each channel and a channel neighboring the channel as well as obstacle information, time of a ranging echo pulse corresponding to a ranging pulse to be emitted, and set the light emission mode of lasers 21 that are to perform detection.

Based on a preferred embodiment of this disclosure, the controller apparatus 23 is configured to determine the light emission mode by means of:
dividing a total ToF window of lasers 21 of multiple channels of each group into at least a first interval and a second interval;
predicting time of at least part of ranging echo pulses generated separately by ranging pulses to be emitted by the lasers 21 of the multiple channels of the each group; and
setting the light emission mode of lasers 21 that are to perform detection to cause ranging echo pulses generated to be distributed in a non-overlapping manner in the second interval after lasers 21 of at least part of multiple channels emitting light in parallel emit ranging pulses.

Based on a preferred embodiment of this disclosure, the controller apparatus 23 is configured to:
divide the second interval into k sub-intervals, where k is an integer and is greater than or equal to the number of channels in the group; and
set the light emission mode of lasers 21 that are to perform detection to cause ranging echo pulses generated to be distributed in a non-overlapping manner in the k sub-intervals after lasers 21 of at least part of multiple channels emitting light in parallel emit ranging pulses.

Based on a preferred embodiment of this disclosure, the length of each of the sub-intervals is greater than a maximum pulse width of ranging echo pulses of the LiDAR 20.

Based on a preferred embodiment of this disclosure, the controller apparatus 23 is configured to: set the light emission mode of lasers 21 that are to perform detection to cause ranging echo pulses generated to be distributed in sub-intervals of the k sub-intervals that are unoccupied and closest in distance after lasers 21 of at least part of the multiple channels emitting light in parallel emit ranging pulses.

Based on a preferred embodiment of this disclosure, the light emission mode is configured to cause at least part of ranging echo pulses separately generated by ranging pulses emitted by lasers 21 of the group of channels to be temporally staggered from each other, and ranging echo pulses generated by ranging pulses emitted by lasers 21 of each channel to not overlap with non-ranging echo pulses generated by non-ranging pulses emitted by lasers 21 of the other channels in the group.

Based on a preferred embodiment of this disclosure, the multiple pulses include at least two ranging pulses, where the ranging pulses are non-first pulses of the multiple pulses.

Based on a preferred embodiment of this disclosure, the controller apparatus 23 is further configured to: calculate multiple distances based on multiple ranging pulses and corresponding multiple ranging echo pulses, respectively; and calculate, based on preset weights of the multiple ranging pulses, a ranging result in a weighted manner based on the multiple distances.

Based on a preferred embodiment of this disclosure, the total ToF window is related to ToF corresponding to a maximum detection distance of the LiDAR 20 and an emission duration of the multi-pulses.

Finally, it should be noted that what is described is only preferred embodiments of this disclosure and is not intended to limit this disclosure, and although this disclosure is described in detail with reference to the foregoing embodiments, for those skilled in the art, it is still possible for them to modify the technical solution recorded in the foregoing embodiments or to make equivalent substitutions for some of the technical features therein. Any modification, equivalent replacement, improvement, or the like made within the spirit and principle of this disclosure should be encompassed within the scope of protection of this disclosure.

## Claims

1. A control method for a LiDAR, wherein the LiDAR comprises n channels, n ≥ 32, each channel being formed by at least one laser and at least one detector, the control method comprising:
S11: determining a light emission mode of lasers that are to emit light; and
S12: controlling the channels to emit light in groups, lasers of channels within each group emitting light in parallel, wherein pulses emitted by the lasers of the group of channels are encoded in accordance with the light emission mode, at least one of pulses emitted by each laser serving as a ranging pulse,
wherein the light emission mode is configured to cause ranging echo pulses of at least part of channels emitting light in parallel to be temporally staggered from each other.

2. The control method of claim 1, wherein at least part of the lasers are configured to emit a single pulse, and the light emission mode comprises: encoding, for the lasers emitting single pulses, emission time points of the single pulses.

3. The control method of claim 1, wherein at least part of the lasers are configured to emit multi-pulses, wherein the light emission mode comprises: for the lasers emitting multi-pulses, emitting the first pulses in parallel and encoding intervals of the multi-pulses.

4. The control method of claim 1, wherein the step S11 comprises: predicting, based on previous ranging results of each channel, time of a ranging echo pulse corresponding to a ranging pulse to be emitted, and setting the light emission mode of the lasers that are to emit light.

5. The control method of claim 4, wherein the step S11 comprises: predicting, based on previous ranging results of each channel and a channel neighboring the channel and obstacle information, time of a ranging echo pulse corresponding to a ranging pulse to be emitted, and setting the light emission mode of lasers that are to perform detection.

6. The control method of claim 4 or 5, wherein the step S11 comprises:
S111: dividing a total time of flight ("ToF") window of lasers of a plurality of channels of each group into at least a first interval and a second interval;
S112: predicting time of at least part of ranging echo pulses generated separately by ranging pulses to be emitted by the lasers of the plurality of channels of the each group; and
S113: setting the light emission mode of lasers that are to perform detection to cause ranging echo pulses generated to be distributed in a non-overlapping manner in the second interval after lasers of at least part of a plurality of channels emitting light in parallel emit ranging pulses.

7. The control method of claim 6, wherein the step S111 further comprises: dividing the second interval into k sub-intervals, wherein k is an integer and is greater than or equal to the number of channels in the group; and
the step S113 comprises: setting the light emission mode of lasers that are to perform detection to cause ranging echo pulses generated to be distributed in a non-overlapping manner in the k sub-intervals after lasers of at least part of a plurality of channels emitting light in parallel emit ranging pulses.

8. The control method of claim 7, wherein the length of each of the sub-intervals is greater than a maximum pulse width of ranging echo pulses of the LiDAR.

9. The control method of claim 7, wherein the step S113 comprises: setting the light emission mode of lasers that are to perform detection to cause ranging echo pulses generated to be distributed in sub-intervals of the k sub-intervals that are unoccupied and closest in distance after lasers of at least part of a plurality of channels emitting light in parallel emit ranging pulses.

10. The control method of claim 9, wherein the light emission mode is further configured to cause at least part of ranging echo pulses generated by ranging pulses emitted by lasers of each channel to not overlap with non-ranging echo pulses generated by non-ranging pulses emitted by lasers of the other channels in the group.

11. The control method of any one of claims 1-5, wherein the plurality of pulses comprise at least two ranging pulses, the ranging pulses being non-first pulses of the plurality of pulses.

12. The control method of claim 11, further comprising:
calculating a plurality of distances based on a plurality of ranging pulses and a corresponding plurality of ranging echo pulses, respectively; and
calculating, based on preset weights of the plurality of ranging pulses, a ranging result in a weighted manner based on the plurality of distances.

13. The control method of claim 6, wherein the total ToF window is related to ToF corresponding to a maximum detection distance of the LiDAR and an emission duration of the multi-pulses.

14. A computer storage medium, comprising computer-executable instructions stored thereon, the executable instructions, when executed by a processor, implementing the control method of any one of claims 1-13.

15. A multi-channel LiDAR, comprising:
a plurality of lasers configured to emit pulses in accordance with a light emission mode, at least one of pulses emitted by each laser serving as a ranging pulse;
a plurality of detectors, the plurality of lasers and the plurality of detectors forming a plurality of channels, each channel comprising at least one laser and at least one detector; and
a controller apparatus, the controller apparatus being connected to the lasers and the detectors and configured to:
determine a light emission mode of lasers that are to emit light; and
control the channels to emit light in groups, lasers of channels within each group emitting light in parallel, wherein pulses emitted by the lasers of the group of channels are encoded in accordance with the light emission mode, at least one of pulses emitted by each laser serving as a ranging pulse,
wherein the light emission mode is configured to cause ranging echo pulses of at least part of channels emitting light in parallel to be temporally staggered from each other.

16. The LiDAR of claim 15, wherein at least part of the lasers are configured to emit single pulses, and the controller apparatus is further configured to: encode, for the lasers emitting single pulses, emission time points of the single pulses.

17. The LiDAR of claim 15, wherein at least part of the lasers are configured to emit multi-pulses, and the controller apparatus is further configured to: for the lasers emitting multi-pulses, emit the first pulses in parallel and encode intervals of the multi-pulses.

18. The LiDAR of claim 15, wherein the controller apparatus is configured to: predict, based on previous ranging results of each channel, time of a ranging echo pulse corresponding to a ranging pulse to be emitted, and set the light emission mode of the lasers that are to emit light.

19. The LiDAR of claim 18, wherein the controller apparatus is configured to: predict, based on previous ranging results of each channel and a channel neighboring the channel and obstacle information, time of a ranging echo pulse corresponding to a ranging pulse to be emitted, and set the light emission mode of lasers that are to perform detection.

20. The LiDAR of claim 18 or 19, wherein the controller apparatus is configured to determine the light emission mode by means of
dividing a total time of flight ("ToF") window of lasers of a plurality of channels of each group into at least a first interval and a second interval;
predicting time of at least part of ranging echo pulses generated separately by ranging pulses to be emitted by the lasers of the plurality of channels of the each group; and
setting the light emission mode of lasers that are to perform detection to cause ranging echo pulses generated to be distributed in a non-overlapping manner in the second interval after lasers of at least part of a plurality of channels emitting light in parallel emit ranging pulses.

21. The LiDAR of claim 20, wherein the controller apparatus is configured to:
divide the second interval into k sub-intervals, wherein k is an integer and is greater than or equal to the number of channels in the group; and
set the light emission mode of lasers that are to perform detection to cause ranging echo pulses generated to be distributed in a non-overlapping manner in the k sub-intervals after lasers of at least part of a plurality of channels emitting light in parallel emit ranging pulses.

22. The LiDAR of claim 21, wherein the length of each of the sub-intervals is greater than a maximum pulse width of ranging echo pulses of the LiDAR.

23. The LiDAR of claim 20, wherein the controller apparatus is configured to: set the light emission mode of lasers that are to perform detection to cause ranging echo pulses generated to be distributed in sub-intervals of the k sub-intervals that are unoccupied and closest in distance after lasers of at least part of a plurality of channels emitting light in parallel emit ranging pulses.

24. The LiDAR of claim 23, wherein the light emission mode is configured to cause: at least part of ranging echo pulses separately generated by ranging pulses emitted by lasers of the group of channels to be temporally staggered from each other, and ranging echo pulses generated by ranging pulses emitted by lasers of each channel to not overlap with non-ranging echo pulses generated by non-ranging pulses emitted by lasers of the other channels in the group.

25. The LiDAR of any one of claims 15-19, wherein the plurality of pulses comprise at least two ranging pulses, the ranging pulses being non-first pulses of the plurality of pulses.

26. The LiDAR of claim 25, wherein the controller apparatus is further configured to: calculate a plurality of distances based on a plurality of ranging pulses and a corresponding plurality of ranging echo pulses, respectively; and calculate, based on preset weights of the plurality of ranging pulses, a ranging result in a weighted manner based on the plurality of distances.

27. The LiDAR of claim 20, wherein the total ToF window is related to ToF corresponding to a maximum detection distance of the LiDAR and an emission duration of the multi-pulses.
